# EUROPÄISCHE PATENTSCHRIFT

(11) **EP 4 114 731 B1**
(45) Veröffentlichungstag und Bekanntmachung des Hinweises auf die Patenterteilung: **31.01.2024**
(21) Anmeldenummer: 21714095.3
(22) Anmeldetag: 03.03.2021
(51) Int. Cl.: B64D 11/06

(54) **FLUGGASTSITZ MIT UMHAUSUNG**
AIRCRAFT PASSENGER SEAT WITH ENCLOSURE
SIÈGE DE PASSAGER D'AÉRONEF COMPORTANT UNE ENCEINTE

(30) Priorität: 05.03.2020 DE 102020106027
(43) Veröffentlichungstag der Anmeldung: 11.01.2023
(73) Patentinhaber: ZIM Aircraft Seating GmbH, 88090 Immenstaad am Bodensee (DE)
(72) Erfinder: JENSEN, Alexander, 88046 Friedrichshafen (DE); DITTRICH, Marc, 88279 Amtzell (DE)
(74) Vertreter: Otten, Roth, Dobler & Partner mbB Patentanwälte
(86) Internationale Anmeldenummer: PCT/EP2021/055336
(87) Internationale Veröffentlichungsnummer: WO 2021/175923

(56) Entgegenhaltungen:
- EP-A2- 0 854 063
- DE-A1- 4 435 835
- DE-A1-102018 108 351
- DE-C1- 10 214 380
- US-A1- 2004 104 590
- US-A1- 2014 183 923
- US-A1- 2015 284 087

## Beschreibung

Zur Ausstattung von Luftfahrzeugen mit Personen an Bord wie Passagierflugzeugen wie zum Beispiel Langstreckenflugzeugen sind Fluggastsitze bzw. Sitzreihen mit üblicherweise mehreren Fluggastsitzen in einer Vielzahl von Ausführungsformen bekannt. Ein Sitzplatz eines Fluggastsitzes weist einen Sitzboden und eine Rückenlehne auf, wobei regelmäßig zwei oder mehr Fluggastsitze fluchtend nebeneinander zu einer Sitzreihe verbunden sind.

Bei der Ausgestaltung der Fluggastsitze ist darauf zu achten, dass ein hoher Nutz- und Bedienkomfort mit einer Vielzahl von Funktionen vergleichsweise kompakt und unter Einhaltung von Sicherheitsstandards einrichtbar ist. Außerdem müssen Vorkehrungen getroffen werden, um die Reinigung und technische Wartung des Fluggastsitzes zweckmäßig erledigen zu können.

Es werden die EP 0854063 A2 und die US 2004/0104590 A1 genannt.

### Aufgabe und Vorteile der Erfindung

Aufgabe der vorliegenden Erfindung ist es, einen verbesserten Fluggastsitz bereitzustellen, welcher insbesondere im Hinblick auf den Nutz- und Bedienkomfort bei Berücksichtigung von Sicherheitsstandards vorteilhaft ausgebildet ist.

Diese Aufgabe wird durch die Merkmale des Anspruchs 1 sowie des Anspruchs 12 gelöst.

Bevorzugte und vorteilhafte Ausführungen der Erfindung sind in den abhängigen Ansprüchen thematisiert.

Die Erfindung geht aus von einem Fluggastsitz umfassend eine stationäre Umhausung und ein an einer Vorderseite der Umhausung angeordnetes Basisbauteil einer Rückenlehne des Fluggastsitzes, wobei das relativ zur Umhausung bewegbare Basisbauteil bei der Nutzung der Rückenlehne eine Aufrecht-Stellung einnimmt. Beispielsweise sind in einem von einer Fluggastsitz-Rückenlehne abgedeckten Bereich Funktionskomponenten des Fluggastsitzes vorhanden.

Das Basisbauteil stellt vorzugsweise eine Stütz- und Anbaustruktur für die Rückenlehne bereit. In der Aufrecht-Stellung des Basisbauteils, wenn der Fluggastsitz von einer Person als Sitzplatz nutzbar ist, steht eine Längsachse des Basisbauteils zum Beispiel aufrecht zu einer Bodenfläche, auf welcher der Fluggastsitz aufgestellt zum Beispiel um wenige Winkelgrade geneigt zur Senkrechten. Vorzugsweise ist das Basisbauteil ausgebildet, daran weitere Elemente anzubringen für die Nutzung des Fluggastsitzes. Solche Elemente sind insbesondere zum bequemen Sitzen bzw. rückenseitigen Anlehnen in dem Fluggastsitz vorgesehen wie zum Beispiel Polsterelemente der Rückenlehne des Fluggastsitzes. Das Basisbauteil überspannt mit seiner Außenkontur im Wesentlichen einen Bereich, den die Rückenlehne des fertigen Fluggastsitzes einnimmt. Das Basisbauteil ist vorzugsweise ein im Wesentlichen flächiges steifes Bauteil zum Beispiel aus einem Carbon- oder Metall- oder Verbundwerkstoff. Das Basisbauteil kann alternativ ein Rahmen bzw. Gestell bzw. Sitzgestell mit zueinander winklig ausgerichteten Gestellstreben sein, zum Beispiel bestehend aus Metallprofilen.

Die Umhausung ist im in einer Flugkabine eingebauten Zustand des Fluggastsitzes ein aufrecht ausgerichtetes Bauteil vorzugsweise feststehend bzw. unbeweglich bzw. stationär im Fluggastraum bzw. in der Flugkabine des Passagierflugzeuges auf der Bodenfläche vorhanden. Die zum Beispiel schalenförmige bzw. vorzugsweise Flächenabschnitte aufweisende Umhausung erstreckt sich vorzugsweise auf eine Sitzrichtung des Fluggastsitzes bezogen hinter dem Basisbauteil mit seiner Umhausung-Außenkontur zum Beispiel seitlich etwas über eine Außenkontur des Basisbauteils hinaus bzw. ist z. B. etwas breiter als das Basisbauteil.

Der Kern der Erfindung liegt darin, dass eine Sicherungsvorrichtung zur aufhebbaren Sicherung des Basisbauteils in der Aufrecht-Stellung vorgesehen ist, insbesondere zur Sicherung an der Umhausung, wobei ein Sicherungselement der Sicherungsvorrichtung aus einer Sicherungsstellung des Sicherungselements an der Sicherungsvorrichtung in eine Freigabestellung des Sicherungselements verstellbar ist, wobei zur Arretierung des Sicherungselements in der Sicherungsstellung ein bewegbares Arretierorgan der Sicherungsvorrichtung an einer Rastkontur am Sicherungselement derart in Anlage kommt, dass das Sicherungselement in der Sicherungsstellung arretiert ist. Vorzugsweise kommt das Arretierorgan an der Rastkontur am Sicherungselement kraftbeaufschlagt bzw. federkraftbeaufschlagt in Anlage an der Rastkontur. Das Sicherungselement ist vorzugsweise ein Schiebeelement, zum Beispiel bolzen- oder stiftförmig, zum Beispiel wenige Zentimeter lang. Das beispielsweise als Rastorgan ausgebildete Arretierorgan ist vorzugsweise quer zur Längsrichtung des Sicherungselements ausweichbar bzw. elastisch bewegbar. So kann das Arretierorgan feder-vorgespannt in die Rastkontur einrasten bzw. arretiert sein und ist in entgegengesetzter Richtung elastisch verbiegbar zum Aufheben des Arretierzustands und damit zum Erreichen der Freigabestellung des Sicherungselements.

Damit wird eine "Quick-Release"-Sicherung also eine einfach und schnell lösbare Sicherung bereitgestellt. Mit der Sicherungsvorrichtung kann auf einfache Weise und kompakt eine zuverlässig eingerichtete und unkompliziert lösbare Sicherung der Aufrecht-Stellung des Basisbauteils bereitgestellt werden. Vorzugsweise ist die Sicherungsvorrichtung so ausgebildet, dass diese manuell bedienbar ist bzw. die Sicherungsstellung von Hand zum Beispiel mit einem einfachen Handgriff lösbar und wieder einrichtbar ist am Fluggastsitz. Das Basisbauteil ist vorzugsweise über eine Gelenkanordnung aus der aufrechten und nutzbaren Aufrecht-Stellung klappbar in eine horizontale Abklapp- bzw. Nichtnutz-Stellung bzw. nach vorne in Richtung des Sitzbodens des Fluggastsitzes. Damit kann im gelösten Zustand der Sicherungsvorrichtung die Rückenlehne mit deren Anlehnfläche zum Beispiel so weit nach vorne unten geklappt werden, dass die Anlehnfläche auf eine Sitzfläche des Sitzbodens herangeklappt ist bzw. in zumindest nahezu horizontale Ausrichtung gebracht ist. Eine zuvor von dem Basisbauteil bzw. der Rückenlehne verdeckte Vorderseite der Umhausung ist damit zumindest abschnittsweise offen bzw. von vorne frei zugänglich.

Die mit der Sicherungsvorrichtung einrichtbare Sicherung des Basisbauteils an der Umhausung sichert demgemäß das Basisbauteil gegen ein Abklappen aus der Aufrecht-Stellung in eine Richtung bzw. in die Abklapp-Stellung. Mit der Arretierung des Sicherungselements in der Sicherungsstellung ist das Basisbauteil in seiner Position fixiert bzw. es ist keine Verstellung bzw. kein Schwenken bzw. Abklappen möglich. Hierbei greift das Sicherungselement an einem Verankerungsabschnitt der Sicherungsvorrichtung ein, wobei der Verankerungsabschnitt vorzugsweise an der Umhausung vorhanden ist. Das Sicherungselement ist vorzugsweise linear bzw. in Richtung seiner Längsrichtung verstellbar. Das Sicherungselement ist vorzugsweise geführt über zumindest zwei getrennte Lagerstellen verstellbar. Das Sicherungselement ist reversibel verstellbar zwischen der Sicherungsstellung und der Freigabestellung. Die Sicherungsvorrichtung ist so ausgebildet, dass die Verstellung des Sicherungselements in der Sicherungsstellung in beide Verstellrichtungen der linearen Verstellung unterbunden ist. Die Verstellung in eine Richtung ist durch das Arretierorgan unterbunden. Die Verstellung in die andere Richtung ist zum Beispiel durch einen mechanischen Anschlag unterbunden.

Das Sicherungselement ist vom Arretierorgan bevorzugt drückend bzw. klemmend arretierbar.

Die Sicherungsvorrichtung bzw. zumindest das Sicherungselement ist vorzugsweise an einem zu einem Flächenabschnitt des Basisbauteils abgewinkelten Längsrand des Basisbauteils wie ein Längs-Seitenrand vorhanden. Bevorzugt ist an beiden gegenüberliegenden Längsrändern des Basisbauteils jeweils eine Sicherungsvorrichtung vorgesehen.

Bevorzugt ist eine Sicherungsvorrichtung an einem oberen Rand des Basisbauteils vorhanden, zum Beispiel als eine dritte Sicherungsvorrichtung am Basisbauteil.

Das Sicherungselement, dessen Lageranordnung und das Arretierorgan der Sicherungsvorrichtung sind vorzugsweise an dem Basisbauteil vorhanden. Der Verankerungsabschnitt ist z. B. an der Umhausung vorgesehen.

Eine Anordnung des kraftbeaufschlagten geführten Sicherungselements und/oder des Arretierorgans ist alternativ an der Umhausung möglich. Dann ist der Verankerungsabschnitt der Sicherungsvorrichtung vorzugsweise an dem Basisbauteil vorgesehen.

Vorteilhafterweise ist ein Verankerungsabschnitt der Sicherungsvorrichtung vorgesehen, an welchem das Sicherungselement der Sicherungsvorrichtung in der Sicherungsstellung verankerbar ist. Der Verankerungsabschnitt ist vorzugsweise an der Umhausung vorhanden.

Der Verankerungsabschnitt weist vorzugsweise eine Ausnehmung oder eine Öffnung auf, welche auf das Sicherungselement abgestimmt ist. Insbesondere ist die Ausnehmung oder Öffnung für ein passendes Durchgreifen des Sicherungselements in dessen Sicherungsstellung ausgebildet. Vorzugsweise umfasst der Verankerungsabschnitt ein Aufnahmeorgan mit einer Öffnung, durch welche das Sicherungselement in der Sicherungsstellung des Sicherungselements durchgreift. Das Sicherungselement ragt in der Freigabestellung des Sicherungselements nicht in die Öffnung hinein bzw. ist frei vom Verankerungsabschnitt. Der Verankerungsabschnitt ist vorzugsweise beweglich zum Beispiel schwenkbar gelagert an der Umhausung. Der Verankerungsabschnitt ist zum Beispiel an einem schwenkbar an der Umhausung gelagerter Hebel ausgebildet. Am Hebel ist die Ausnehmung bzw. Öffnung vorhanden. Die Öffnung ist durch ein entsprechendes Ausrichten des Hebels in den Verstellweg des Sicherungselements bringbar, so dass das Sicherungselement passend durch die Öffnung durchschiebbar ist bzw. darin eingreift in der Sicherungsstellung. Das Basisbauteil ist am

Verankerungsabschnitt bzw. an der Umhausung fixiert. Erfindungsgemäß ist das Arretierorgan federnd bewegbar. Damit wird eine hohe Zuverlässigkeit der Sicherungsstellung des Sicherungselements erreicht, indem das Arretierorgan durch eine Federkraft beaufschlagt bzw. selbsttätig an der Rastkontur am Sicherungselement in Anlage kommt, sobald das Sicherungselement die dazugehörige Stellung einnimmt. Damit ist das Sicherungselement in der Sicherungsstellung gesichert bzw. federnd beaufschlagt vom Arretierorgan. Außerdem ist die Aufhebung der Sicherungsstellung des Sicherungselements vorteilhaft möglich, indem das Arretierorgan gegen die Federkraft bewegt wird, was manuell problemlos möglich ist. Das Arretierorgan ist demgemäß relativ zum Sicherungselement manuell bedienbar bzw. aus einer Raststellung am Sicherungselement in eine Freigabestellung bringbar. Vorteilhafterweise ist auch das Sicherungselement manuell bewegbar, zum Beispiel hin- und herschiebbar.

Gemäß einer bevorzugten Abwandlung der Erfindung ist das Arretierorgan quer zur Bewegungsrichtung des Sicherungselements elastisch ausweichbar ausgebildet. Das Arretierorgan ist erfindungsgemäß als Federelement gebildet, zum Beispiel aus einem Blech bzw. Stahlblech gebildet. Das Arretierorgan ist zum Beispiel an einem Halteelement der Sicherungsvorrichtung vorhanden.

Auch liegt ein Vorteil darin, dass das Arretierorgan als Blattfeder ausgebildet ist. Dadurch ist das Arretierorgan mit wenig Materialeinsatz und einfach herstellbar.

Ein anderer Vorteil ergibt sich, wenn das Sicherungselement an einem ersten Lagerabschnitt und an einem zweiten Lagerabschnitt gelagert ist, wobei der erste Lagerabschnitt und der zweite Lagerabschnitt in Längsrichtung des Sicherungselements durch einen Zwischenraum voneinander beabstandet sind. Damit ist eine die beiden Lagerabschnitte umfassende Lagerung des Sicherungselements bereitgestellt, so dass das Sicherungselement kippsicher bzw. exakt linear beweglich gelagert ist. Der erste Lagerabschnitt und der zweite Lagerabschnitt sind vorzugsweise an dem Halteelement vorhanden.

Weiter ist es vorteilhaft, dass das Sicherungselement und die Lagerabschnitte derart aufeinander abgestimmt sind, dass das Sicherungselement sowohl in der Sicherungsstellung als auch in der Freigabestellung an dem ersten Lagerabschnitt und an dem zweiten Lagerabschnitt gelagert ist. Damit ist immer eine zumindest Zweipunktlagerung gegeben. Vorzugsweise ist die Lagerung derart gebildet, dass in sämtlichen möglichen Stellungen bzw. Bewegungspositionen des Sicherungselements an beiden Lagerabschnitten bzw. an den zwei Lagerabschnitten gelagert ist. Dies erhöht die Funktionssicherheit der Sicherungsvorrichtung.

Demgemäß ist das Sicherungselement unabhängig von dessen Verschiebestellung permanent an den beiden Lagerabschnitten gelagert. Die Lagerung ist vorzugsweise als Gleitlagerung ausgebildet. Beispielsweise durch zwei beabstandete Öffnungen, durch welche das Sicherungselement durchgreift, wobei der Abstand zwischen den beiden Lagerabschnitten vom Sicherungselement überbrückt ist. Daher ist das Sicherungselement länger als der betreffende Abstand der beiden Lagerstellen, vorzugsweise zumindest doppelt so lang wie der betreffende Abstand der beiden Lagerabschnitte in Durchgreifrichtung des Sicherungselements.

Ein Vorteil ist weiter darin zu sehen, dass ein Halteelement mit zwei voneinander beabstandeten Schenkeln vorgesehen ist, wobei an einem Schenkel der erste Lagerabschnitt vorhanden ist und an einem anderen Schenkel des Halteelements der zweite Lagerabschnitt vorhanden ist. Das Halteelement der Sicherungsvorrichtung ist vorzugsweise aus einem gebogenen Blechelement gebildet. Das Haltelement ist zum Beispiel angeschraubt oder angenietet am Basisbauteil. Die Schenkel sind vorzugsweise in einer Längsrichtung des Sicherungselements bzw. in einer Durchsteck- bzw. Bewegungsrichtung des Sicherungselements an der Sicherungsvorrichtung voneinander beabstandet. Die vorzugsweise durch je eine Öffnung im jeweiligen Schenkel gebildeten Lagerabschnitte sind so fluchtend in den Schenkeln vorhanden, dass das Sicherungselement gleitend durch beide Öffnungen greifend verschiebbar ist.

Das Halteelement ist vorzugsweise zumindest angenähert U-förmig bzw. bügelförmig mit zwei winklig zu einem Mittelabschnitt auf die gleiche Seite vorstehenden Schenkeln. Am Halteelement vorzugsweise an einem der beiden Schenkel ist ein Anbringabschnitt zur Anbringung des Halteelements z. B. an dem Basisbauteil vorhanden. Vorzugsweise am Mittelabschnitt ist das Arretierorgan vorhanden, vorzugsweise vorstehend in die Richtung, in welche die Schenkel vorstehen.

Überdies ist es vorteilhaft, wenn das Arretierorgan als ein zum Sicherungselement separates Bauteil ausgebildet ist, das auf das Sicherungselement wirkt. Das Arretierorgan kann ein am Halteelement angebrachtes separates Bauteil sein oder am Halteelement einstückig vorhanden sein.

Das Arretierorgan ist vorzugsweise als eine federnde Metalllasche bzw. Blechlasche gebildet. Die Metalllasche kann mit einem freien Ende an der Rastkontur des Sicherungselements in Anlage kommen bzw. verrasten und mit dem anderen Ende am Halteelement angreifen bzw. verbunden sein.

Weiter ergibt sich ein Vorteil daraus, dass das Sicherungselement länglich ausgebildet ist mit einem Schaftabschnitt und einem Kopfabschnitt, wobei der Schaftabschnitt die Rastkontur umfasst. Damit ist die Sicherungsvorrichtung platzsparend und stabil ausbildbar. Der Kopfabschnitt ist vorzugsweise kürzer als der Schaftabschnitt und weist zumindest abschnittsweise ein zum Außenmaß des Schaftabschnitts vorzugsweise vergrößertes Außenmaß auf. Die Rastkontur ist vorzugsweise umfänglich außen durch einen tieferliegenden Bereich am Schaftabschnitt gebildet zum Beispiel durch eine Nut oder einen Kerbabschnitt. Die Rastkontur weist vorzugsweise einen in Richtung der Längsachse des Sicherungselements konisch sich verjüngenden Konturabschnitt auf.

Der längliche, in der Grundform zum Beispiel zylindrische Schaftabschnitt macht die überwiegende Länge des Sicherungselements aus. Der Schaftabschnitt ist an den Lagerabschnitten aufgenommen. Am Sicherungselement ist der Kopfabschnitt z. B. mit einem Absatz bzw. Kragen vom Schaftabschnitt abgesetzt. In der Sicherungsstellung steht der Absatz an einem Anschlag an z. B. am Schenkel mit dem ersten Lagerabschnitt. Der Kopfabschnitt dient als manuell greifbarer Bedienabschnitt des Sicherungselements.

Nach einer vorteilhaften Variante weist die Rastkontur einen Kerbabschnitt auf, wobei der Kerbabschnitt an dem Schaftabschnitt vorhanden ist, wobei ein Außenmaß des Kerbabschnitts geringer ist als ein Außenmaß des verbleibenden Schaftabschnitts. Vorzugsweise weist die Rastkontur einen Kerbabschnitt auf, wobei der Kerbabschnitt in einem mittleren Längsbereich und /oder an einem dem Kopfabschnitt abgewandten Endbereich des Schaftabschnitts vorhanden ist.

Der Kerbabschnitt ist zur Längsachse des Sicherungselements bzw. des Schaftabschnitts vorzugsweise umfänglich durchgehend bzw. geschlossen gebildet. Vorzugsweise ist der z. B. als Einschnürung ausgebildete bzw. rillenförmige Kerbabschnitt über eine Teillänge des Schaftabschnitts ausgebildet. Der Kerbabschnitt weist einen umfänglich verlaufenden Absatz auf, mit einer axialen ringförmigen Fläche, die sich vom Außendurchmesser radial nach innen bis zu einem tiefsten Kerbgrund erstreckt. An den Kerbgrund schließt sich ein konischer Abschnitt an, der vom Kerbgrund radial innen bis zum Außendurchmesser des Schaftabschnitts sich aufweitet. Damit wird der Übergang von der Freigabestellung in die Sicherungsstellung bzw. das Erreichen der Sicherungsstellung unterstützt, indem das federnd quer zur Längsachse des Sicherungselements bewegliche Arretierorgan in der Rastkontur über den konischen Abschnitt entlanggleitend bis zum Kerbgrund geführt wird und dort federnd einschnappt bzw. in Anlage gelangt. Damit ist mit dem Arretierorgan ein Verschieben des Sicherungselements in eine Richtung blockiert und in die andere Richtung bzw. Löserichtung möglich. Vorzugsweise ist mit dem zum Beispiel ersten Kerbabschnitt in der Sicherungsstellung des Sicherungselements ein Verschieben des Sicherungselements in die Freigabestellung blockiert. Demgemäß verjüngt sich der konische Abschnitt von dem zum Kopfabschnitt zugewandten Ende hin zum freien Ende des Sicherungselements.

Ein zum ersten Kerbabschnitt weiterer Kerbabschnitt kann am Schaftabschnitt vorhanden sein, um das Sicherungselement in der Freigabestellung in eine Richtung zu blockieren, die dazu führen würde, dass das Sicherungselement sich vom Halteelement löst bzw. um ein Wegnehmen des Sicherungselements vom Halteelement zu unterbinden.

Weiter ist es von Vorteil, wenn zumindest zwei, vorzugsweise genau drei Sicherungsvorrichtungen zur aufhebbaren Sicherung des Basisbauteils in der Aufrecht-Stellung vorgesehen sind.

Die Sicherungsvorrichtungen umfassen bevorzugt zwei Sicherungsvorrichtungen, wobei jeweils eine Sicherungsvorrichtung an jeweils einem Außenrand des Basisbauteils vorhanden ist. Die Außenränder betreffen zwei gegenüberliegende Außenränder des Basisbauteils. Die beiden Sicherungsvorrichtungen sind vorzugsweise an zwei horizontal beabstandeten und vorzugsweise horizontal gegenüberliegenden Längsrändern des Basisbauteils vorhanden. Weiter ist vorzugsweise eine dritte Sicherungsvorrichtung an einem oberen Rand des Basisbauteils, zum Beispiel im Bereich einer halben Breite des Basisbauteils vorgesehen sein. Wenn sämtliche Sicherungselemente der vorhandenen Sicherungsvorrichtungen sich in der Freigabestellung befinden, kann das Basisbauteil in die Abklappstellung gebracht werden und Komponenten bzw. Einrichtungen des Fluggastsitzes, die in der Aufrecht-Stellung des Basisbauteils bzw. der Rückenlehne verdeckt sind, sind dann von vorne zugänglich z. B. zur Wartung oder Überprüfung und dergleichen. Nach dem erneuten Hochklappen des Basisbauteils werden die Sicherungselemente der zwei oder drei Sicherungsvorrichtungen wieder in die Sicherungsstellung gebracht und die Rückenlehne ist fixiert z. B. an bzw. relativ zur Umhausung.

Die Erfindung erstreckt sich vorteilhaft auf eine Sitzreihe umfassend zwei oder mehr als zwei nebeneinander vorhandene Fluggastsitze, wobei die Sitzreihe einen Fluggastsitz gemäß einer der vorhergehend beschriebenen Ausbildungen umfasst.

Damit können sämtliche oder einzelne Fluggastsitze einer Sitzreihe vorteilhaft mit einem klappbaren und einfach und zuverlässig sicherbaren Basisbauteil bzw. einer damit gebildeten Rückenlehne versehen sein.

### Figurenbeschreibung

Nachfolgend sind weitere Merkmale und Vorteile der Erfindung anhand eines schematisch dargestellten Ausführungsbeispiels näher erläutert.

Im Einzelnen zeigt:
- Figur 1: in einer perspektivischen Ansicht schräg von vorne eine Sitzreihe mit zwei Fluggastsitzen jeweils umfassend einen Sitzboden, eine Rückenlehne samt rückseitiger Umhausung und eine Beinauflage,
- Figur 2: die Sitzreihe gemäß Figur 1 in einer perspektivischen Ansicht von schräg hinten,
- Figur 2a: einen Ausschnitt einer Grundstruktur eines Fluggastsitze der Sitzreihe gemäß Fig. 1, 2 mit einem etwas vorgeklappten Basisbauteil einer Rückenlehne ohne Sicherungsvorrichtungen,
- Figur 3: das Basisbauteil gemäß Fig. 2a mit Sicherungsvorrichtungen von hinten,
- Figur 4: den vergrößert gezeigten umrandeten Bereich A in Fig. 3 mit einer Sicherungsvorrichtung in einer Freigabestellung,
- Figur 5: den Ausschnitt gemäß Fig. 4 perspektivisch schräg von oben,
- Figur 6: den Ausschnitt gemäß Fig. 4 in einer weiteren perspektivischen Ansicht in einer Sicherungsstellung der Sicherungsvorrichtung,
- Figur 7: das Basisbauteil gemäß Fig. 3 von vorne,
- Figur 8: einen Ausschnitt der Basisbauteil gemäß Fig. 7,
- Figur 9: den vergrößert gezeigten umrandeten Bereich B in Fig. 8,
- Figur 10: den vergrößert gezeigten umrandeten Bereich C in Fig. 3 mit einer Sicherungsvorrichtung in einer Sicherungsstellung und
- Figur 11: die Sicherungsvorrichtung gemäß Fig. 10 in einer Freigabestellung.

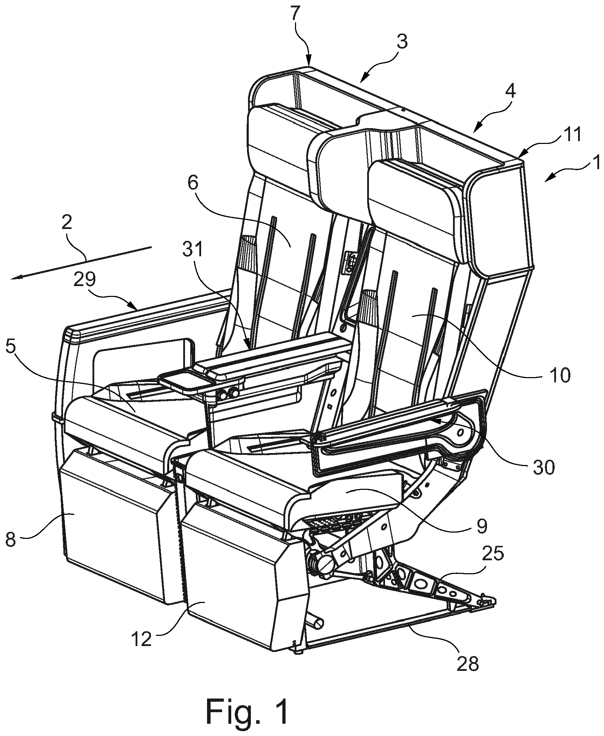

Figur 1 zeigt eine Sitzreihe 1 mit einer Sitzrichtung 2 mit zwei Fluggastsitzen 3 und 4. Nachfolgend beziehen sich Positions- und Richtungsangaben wie vorne, hinten, oben und unten auf die Sitzrichtung 2 und den Nutzzustand der Sitzreihe 1.

Beide Fluggastsitze 3 und 4 sind entsprechend aufgebaut. Der Fluggastsitz 3 weist einen Sitzboden 5, eine Rückenlehne 6 und eine zur Rückenlehne 6 rückseitige Umhausung 7 auf. Im Anschluss an einen vorne liegenden Endbereich des Sitzbodens 5 ist eine vorzugsweise klappbare Beinauflage 8 vorhanden, die um eine horizontale Achse klappbar ist.

Dementsprechend umfasst der Fluggastsitz 4 einen Sitzboden 9, eine Rückenlehne 10, eine Umhausung 11 und eine Beinauflage 12.

Die Sitzboden 5, 9, die Rückenlehnen 6, 10 und die Beinauflagen 8, 12 umfassen eine vorzugsweise ergonomisch geformte Polsterung.

Die Fluggastsitze 3 und 4 sind über zwei Stützbeine 13 und 14 an einem Kabinenboden einer Flugkabine eines dazugehörigen Flugzeuges montierbar.

Das Stützbein 13 weist hierfür an einem unteren Endbereich 16 einer vorderen Strebe 15 eine Montagestelle 17 und eine weitere Montagestelle 20 an einem unteren Endbereich 19 einer hinteren Strebe 18 auf. Zwischen den Endbereichen 16 und 19 ist ein Verstrebungselement 21 vorgesehen.

Das Stützbein 14 weist an einem unteren Endbereich 23 einer vorderen Strebe 22 eine Montagestelle 24 und eine weitere Montagestelle 27 an einem unteren Endbereich 26 einer hinteren Strebe 25 auf. Zwischen den Endbereichen 23 und 26 ist ein Verstrebungselement 28 vorgesehen.

Die Sitzreihe 1 weist zudem eine äußere Armlehne 29 seitlich am Fluggastsitz 3 und eine äußere Armlehne 30 seitlich am Fluggastsitz 4 auf. Zwischen den beiden Fluggastsitzen 3 und 4 ist vorzugsweise auf Höhe der beiden äußeren Armlehnen 29 und 30 eine Konsole 31 vorhanden, welche von einem Fluggast ebenfalls als Armauflage genutzt werden kann.

In einer Schalenform der jeweiligen Umhausung 7 bzw. 11 ist die jeweils dazugehörige Rückenlehne 6 bzw. 10 angeordnet. Die Rückenlehne 6 bzw. 10 ist vorzugsweise zur Einstellung von unterschiedlichen Kippstellungen beweglich in der Umhausung 7 bzw. 11 geführt, beispielsweise zusammen mit dem dazugehörigen verschiebbar gelagerten Sitzboden 5 bzw. 9.

Die Umhausungen 7 und 11 sind mit weiteren Elementen versehen, z. B. rückseitig jeweils mit Zusatzfunktionen versehen. In einem oberen rückseitigen Bereich der Umhausungen 7, 11 ist beispielsweise jeweils eine Multimedia-Einheit 32 für digitale Medien vorgesehen, zum Beispiel mit einem elektronischen Ein- und Ausgabegerät bzw. mit einem Touchscreen.

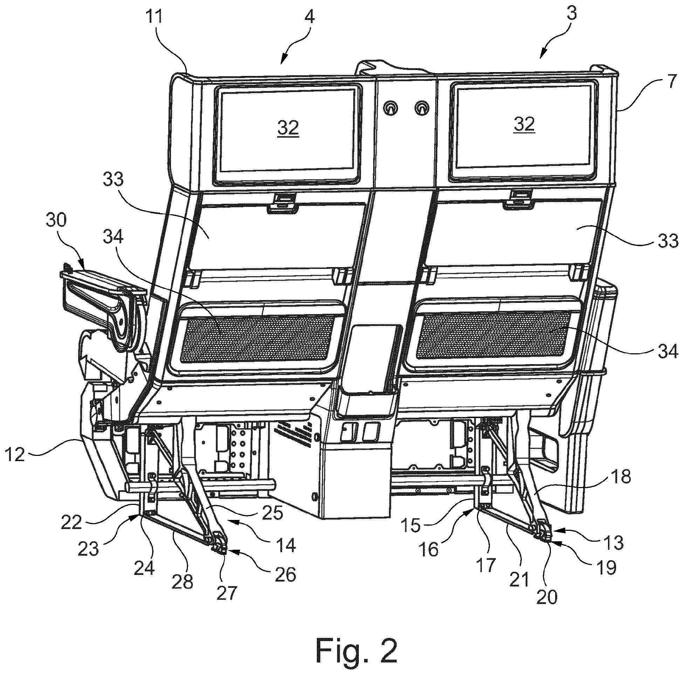

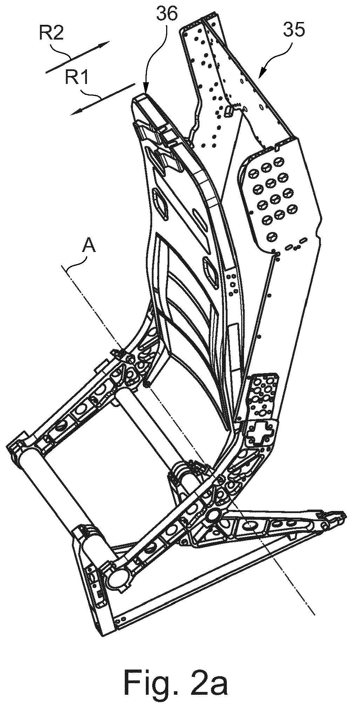

In einem unterhalb an die Multimedia-Einheit 32 anschließenden bzw. mittleren Bereich ist zum Beispiel jeweils ein klappbares Ablageelement 33 wie ein Tablett-Tisch mit einer Tischplatte ausgebildet. In Fig. 2 sind die Ablageelemente 33 in einer nach oben herangeklappten, vertikal stehenden und gesicherten Nichtnutzungsstellung dargestellt.

Unterhalb des jeweiligen klappbaren Ablageelements 33 ist ein Staufach 34 beispielswiese zur Unterbringung von Zeitschriften bzw. Prospekten oder anderen Gegenständen vorhanden.

Fig. 2a zeigt perspektivisch schräg von oben eine Grundstruktur 35 des Fluggastsitzes 4 der Sitzreihe 1 ohne Verkleidungs- und Polsterelemente mit einem an der Grundstruktur 35 vorhandenen Basisbauteil 36 der Rückenlehne 10. Das Basisbauteil 36 ist relativ zur Grundstruktur 35 bzw. Umhausung 11 bewegbar bzw.um eine Achse A gemäß der Klapprichtung R1 nach vorne klappbar und in Richtung R2 nach hinten zurücklappbar. Die Grundstruktur 35 stellt auch eine Grundstruktur der Umhausung 11 des Fluggastsitzes 4 bereit. Das Basisbauteil 36 ist in Fig. 2a bezogen auf eine aufrechte Nutzstellung gemäß der Fig. 1 und 2 in einer etwas in Richtung R1 vorgeklappten Stellung dargestellt.

Bezugnehmend auf den Fluggastsitz 4 ist an der Grundstruktur 35 bzw. an der in der Flugkabine stationären Umhausung 11 damit das Basisbauteil 36 der Rückenlehne 10 auf einer in Sitzrichtung 2 gerichteten Vorderseite der Umhausung 11 angeordnet.

Bei vollständig in Richtung R2 nach hinten geklappten Aufrecht-Stellung des Basisbauteils 36 nimmt die Rückenlehne 10 gemäß Fig. 1 eine Nutz- bzw. Gebrauchsstellung ein, so dass eine in dem Fluggastsitz 4 sitzende Person sich an der Rückenlehne 10 bequem anlehnen kann in einer aufrechten Sitzposition der Person im Fluggastsitz 4.

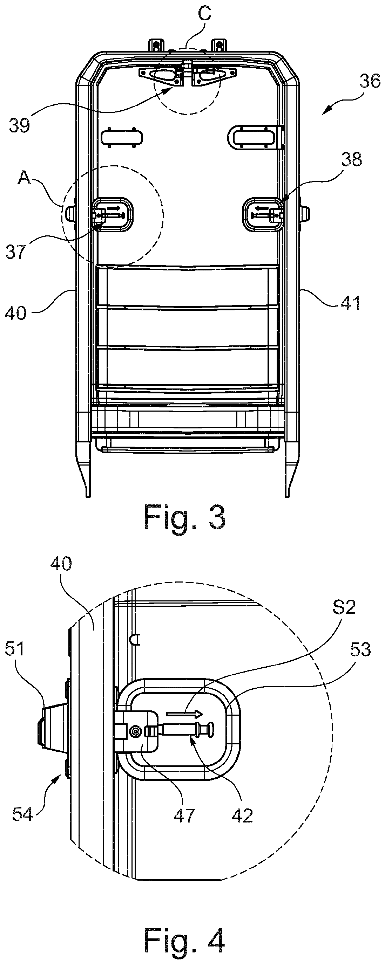

An dem Basisbauteil 36 sind in Fig. 2a weggelassene Sicherungsvorrichtungen 37, 38 und 39 vorhanden, die gemäß der Fig. 3-11 erläutert sind.

Die aufhebbaren Sicherung des Basisbauteils 36 in der Aufrecht-Stellung an der Grundstruktur 35 bzw. der Umhausung 11 erfolgt mit den Sicherungsvorrichtungen 37, 38 und 39.

Die identischen Sicherungsvorrichtungen 37 und 38 sind mit wesentlichen Elementen jeweils an einem Längsrand 40 und einem gegenüberliegenden Längsrand 41 des Basisbauteils 36 vorhanden. Diese Elemente wirken mit einem an der Umhausung 11 existierenden Verankerungsabschnitt 45 mit einer Öffnung 46 zusammen. Die Öffnung 46 ist zum Beispiel an einem als Hebelelement ausgestalteten Bauteil vorhanden, das an der Grundstruktur 35 angelenkt ist.

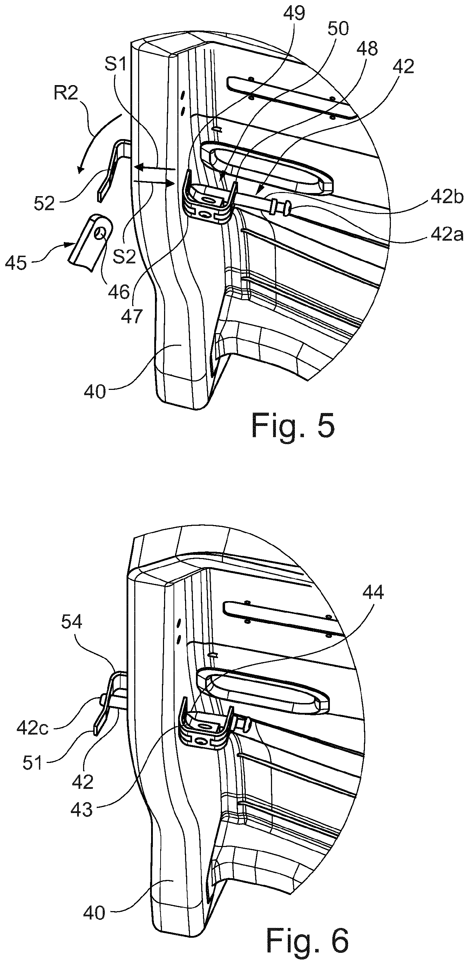

Die Sicherungsvorrichtung 37 umfasst ein in Richtung S1 bzw. in eine Sicherungsrichtung hin verschiebliches und zurück in Richtung S2 zurück verschiebliches Sicherungselement 42. Das längliche bzw. stiftförmige Sicherungselement 42 weist einen Kopfabschnitt 42a und einen Schaftabschnitt 42b auf (s. Fig. 5).

Das Sicherungselement 42 ist aus einer Sicherungsstellung des Sicherungselements 42 gemäß Fig. 6, 8 und 9 an der Sicherungsvorrichtung 37 in eine Freigabestellung des Sicherungselements 42 gemäß der Fig. 3-5 und 7 verstellbar. Zur Arretierung des Sicherungselements 42 in der Sicherungsstellung kommt ein als Federlasche gestaltetes bewegbares Arretierorgan 43 der Sicherungsvorrichtung 37 an einer Rastkontur 44 am Sicherungselement 42 derart in Anlage, dass das Sicherungselement 42 in der Sicherungsstellung arretiert ist (s. Fig. 6).

In der Sicherungsstellung des zwischen der Freigabestellung und der Sicherungsstellung linear gemäß S1 und S2 hin- und herbeweglichen Sicherungselements 42 ist das Sicherungselement 42 an dem Verankerungsabschnitt 45 der Sicherungsvorrichtung 37 verankerbar. Durch die Öffnung 46 des Verankerungsabschnitts 45 greift das Sicherungselement 42 in der Sicherungsstellung. Das Sicherungselement 42 ist in der Freigabestellung entfernt bzw. außer Eingriff von der Öffnung 46. In Fig. 6 ist der in Fig. 5 angedeutete Verankerungsabschnitt 45 weggelassen zur besseren Darstellung der Stellung des Sicherungselements 42.

Das Arretierorgan 43 ist vorzugsweise federnd bewegbar. Das Arretierorgan 43 ist vorzugsweise quer zur Bewegungsrichtung des Sicherungselements elastisch ausweichbar ausgebildet.

Vorzugsweise ist das Arretierorgan 43 als Federlasche bzw. Blattfeder ausgebildet.

Des Weiteren umfasst die Sicherungsvorrichtung 37 ein Halteelement 47 mit zwei voneinander beabstandeten Schenkeln 48, 49. An dem ersten Schenkel 48 des Halteelements 47 ist ein erster Lagerabschnitt wie z. B. ein Durchgangsloch vorhanden und an dem zweiten Schenkel 49 des Halteelements 47 ist ein zweiter Lagerabschnitt wie z. B. ein weiteres Durchgangsloch vorhanden.

Das Sicherungselement 42 ist an dem ersten Lagerabschnitt und an dem zweiten Lagerabschnitt gelagert, wobei der erste Lagerabschnitt und der zweite Lagerabschnitt in Längsrichtung des Sicherungselements 42 durch einen Zwischenraum 50 voneinander beabstandet sind.

Das Sicherungselement 42 und die Lagerabschnitte sind derart aufeinander abgestimmt, dass das Sicherungselement 42 sowohl in der Sicherungsstellung als auch in der Freigabestellung an dem ersten Lagerabschnitt und an dem zweiten Lagerabschnitt gelagert ist.

Das Sicherungselement 42 ist länglich ausgebildet mit dem vergrößerten Kopfabschnitt 42a und dem Schaftabschnitt 42b, wobei der Schaftabschnitt 42b die Rastkontur 44 umfasst.

Die Rastkontur 44 weist einen Kerbabschnitt auf, wobei der Kerbabschnitt vom Kopfabschnitt 42a beabstandet ist. Ein Außenmaß des Kerbabschnitts ist geringer als ein Außenmaß des verbleibenden Schaftabschnitts 42b.

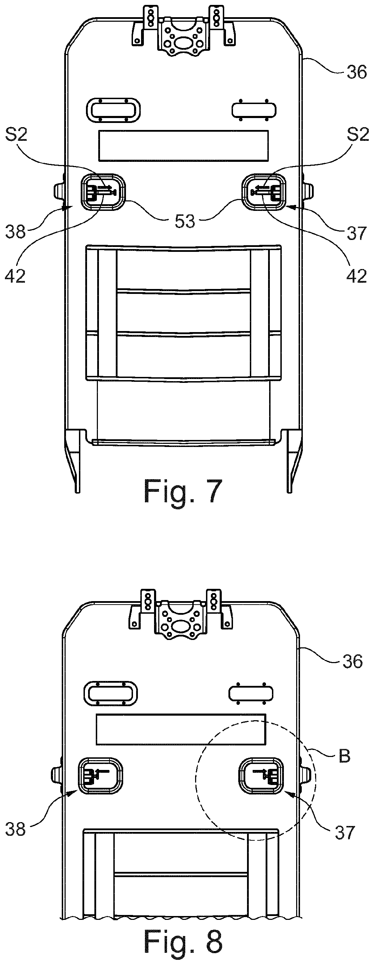

In den Fig. 7 und 8 ist jeweils die Vorderseite des Basisbauteils 36 mit den beiden Sicherungsvorrichtungen 37, 38 dargestellt, wobei gemäß Fig. 7, wie Fig. 3, welche die Rückseite des Basisbauteils 36 zeigt, das Sicherungselement 42 sich in der Freigabestellung befindet. Dies geschieht durch eine Person, welche am Kopfabschnitt 42a der jeweiligen

Sicherungselemente 42 durch manuelles Ziehen das Sicherungselement 42 in Richtung S2 bringt. Zuvor muss von der Person zum Lösen der Arretierung das Arretierorgan 43 vom Schaftabschnitt 42b gegen die elastische Federkraft des Arretierorgans 43 weggedrückt werden, so dass das federnd in die Rastkontur 44 eingreifende Arretierorgan 43 aus der vertieft ausgebildeten Rastkontur 44 am Schaftabschnitt 42b frei kommt.

Da beide Sicherungsvorrichtungen 37, 38 gleich ausgebildet sind und das jeweilige Sicherungselement 42 durch eine Öffnung 46 am jeweiligen Verankerungsabschnitt 45 greift, sind beide Sicherungselemente 42 aus der jeweiligen Öffnung 46 am Verankerungsabschnitt 45 herausgezogen in der Freigabestellung. Bei ebenfalls gelöster Sicherungsvorrichtung 39, was weiter unten erläutert ist, kann dann das Basisbauteil 36 nach vorne in Richtung R1 geklappt werden. Dann sind an der Umhausung 11 vorderseitig vorhandene Einrichtungen bzw. Elemente von vorne zur Reinigung und Wartung und dergleichen erreichbar.

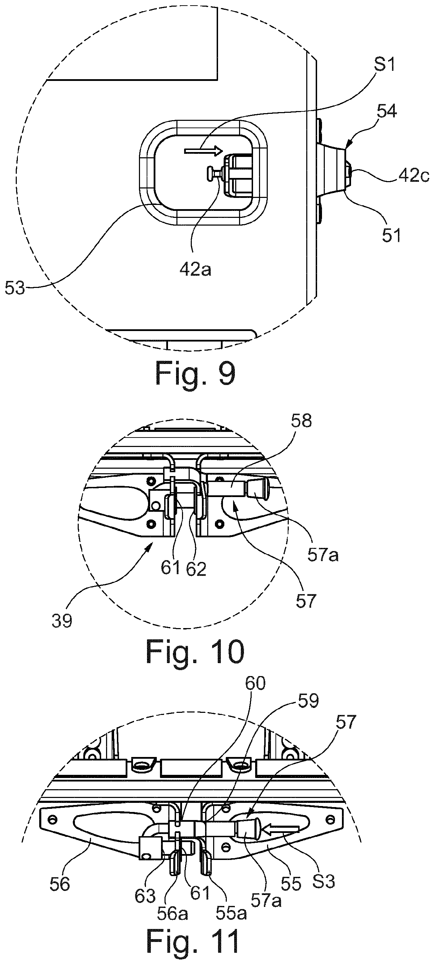

Nach dem Hochklappen des Basisbauteils 36 in Richtung R2 werden die Sicherungselemente 42 der Sicherungsvorrichtung 37, 38 bei positionsrichtiger Ausrichtung zu der jeweiligen Öffnung 46 manuell in Richtung S1 verschoben (s. Fig. 8, 9), so dass das jeweilige Sicherungselement 42 wieder durch die jeweilige Öffnung 46 greift. Dabei reicht ein freies Ende 42c des Sicherungselements 42 durch eine Öffnung 52 in einem Schenkel 51, womit das Sicherungselement 42 über eine weitere Abstützstelle vorteilhaft gelagert ist. Der Schenkel 51 ist z. B. als Teil eines U-förmigen Bügels 54 der Sicherungsvorrichtung 37, der außenseitig am Basisbauteil 36 angebracht ist, mit einem Abstand zu einer Außenseite des Basisbauteils 36 vorhanden. Das dazugehörige Halteelement 47 und der Bügel 54 sind an gegenüberliegenden Bereichen innen und außen an dem winklig nach hinten abstehenden Längsrand 40 des Basisbauteils 36 angebracht (s. Fig. 4-6).

Zum Erreichen bzw. Bedienen der Sicherungsvorrichtungen 37, 38 bzw. der Sicherungselemente 42 von vorne sind im Basisbauteil 36 fensterartige Ausnehmungen 53 vorhanden.

Unterhalb mittig eines oberen horizontal ausgerichteten Abschnitts eines Randes ist die Sicherungsvorrichtung 39 vorgesehen (s. Fig. 3, 10, 11).

Die Sicherungsvorrichtung 39 umfasst zwei Flansche 55 und 56, einen z. B. als Druckfederbolzen ausgebildeten Sicherungsstift 57 mit einer Druckfeder 58. Der U- förmige Sicherungsstift 57 reicht mit einem ersten Längsabschnitt durch zwei fluchtende Öffnungen 59, 60 und mit einem zweiten Längsabschnitt durch zwei weitere fluchtende Öffnungen 61, 62 in einer Sicherungsstellung gemäß Fig. 10. Die Öffnungen 59, 62 sind in einem nach hinten winklig stehenden Schenkel 55a am Flansch 55 vorhanden und die Öffnungen 60, 61 sind in einem nach hinten winklig stehenden Schenkel 56a am Flansch 56 vorhanden. Zwischen den Schenkeln 55a und 56a ergibt sich ein Zwischenbereich, in dem ein in den Figuren nicht dargestellter an der Umhausung 7 vorgesehener Verankerungsabschnitt mit einer Öffnung hineinragt, so dass in der Sicherungsstellung gemäß Fig. 10 der zweite Längsabschnitt des Sicherungsstiftes 57 durch diese Öffnung reicht und an dieser Stelle das Basisbauteil 36 über eine weitere Befestigungsstelle fixiert ist an der Umhausung 7.

In der Sicherungsstellung ragt ein Randbereich der Öffnung 61 in eine Nut 63 außen am zweiten Längsabschnitt des Sicherungsstiftes 57. Zwischen dem Schenkel 55a und einem Kopf 57a des Sicherungsstiftes 57 ist die Druckfeder 58 vorgespannt vorhanden, so dass der Sicherungsstift 57 in seine Sicherungsstellung gedrängt wird gemäß Fig. 10. Durch Drücken auf den Kopf 57a in Richtung S3 (s. Fig. 11) wird gegen die Druckfederkraft der Druckfeder 58 der Sicherungsstift 57 manuell aus der Sicherungsstellung gebracht und aus der Öffnung des dazugehörigen Verankerungsabschnitts herausbewegt, so dass diese Befestigung aufgehoben ist und das Basisbauteil 36 bei freigegebenen Sicherungsvorrichtungen 37, 38 nach vorne in Richtung R1 klappbar ist.

### Bezugszeichenliste

- 1: Sitzreihe
- 2: Sitzrichtung
- 3: Fluggastsitz
- 4: Fluggastsitz
- 5: Sitzboden
- 6: Rückenlehne
- 7: Umhausung
- 8: Beinauflage
- 9: Sitzboden
- 10: Rückenlehne
- 11: Umhausung
- 12: Beinauflage
- 13: Stützbein
- 14: Stützbein
- 15: Strebe
- 16: Endbereich
- 17: Montagestelle
- 18: Strebe
- 19: Endbereich
- 20: Montagestelle
- 21: Verstrebungselement
- 22: Strebe
- 23: Endbereich
- 24: Montagestelle
- 25: Strebe
- 26: Endbereich
- 27: Montagestelle
- 28: Verstrebungselement
- 29: Armlehne
- 30: Armlehne
- 31: Konsole
- 32: Multimedia-Einheit
- 33: Ablageelement
- 34: Staufach
- 35: Grundstruktur
- 36: Basisbauteil
- 37: Sicherungsvorrichtung
- 38: Sicherungsvorrichtung
- 39: Sicherungsvorrichtung
- 40: Längsrand
- 41: Längsrand
- 42: Sicherungselement
- 42a: Kopfabschnitt
- 42b: Schaftabschnitt
- 42c: Ende
- 43: Arretierorgan
- 44: Rastkontur
- 45: Verankerungsabschnitt
- 46: Öffnung
- 47: Halteelement
- 48: Schenkel
- 49: Schenkel
- 50: Zwischenraum
- 51: Schenkel
- 52: Öffnung
- 53: Ausnehmung
- 54: Bügel
- 55: Flansch
- 55a: Schenkel
- 56: Flansch
- 56a: Schenkel
- 57: Sicherungsstift
- 57a: Kopf
- 58: Druckfeder
- 59: Öffnung
- 60: Öffnung
- 61: Öffnung
- 62: Öffnung
- 63: Nut

## Patentansprüche

1. Fluggastsitz (3, 4) umfassend einen Sitzboden (5, 9), eine Rückenlehne (6, 10), eine klappbare Beinauflage (8, 12), eine stationäre Umhausung (7, 11) und ein an einer Vorderseite der Umhausung (7, 11) angeordnetes Basisbauteil (36) der Rückenlehne (6, 10) des Fluggastsitzes (3, 4), wobei das relativ zur Umhausung (7, 11) bewegbare Basisbauteil (36) bei der Nutzung der Rückenlehne (6, 10) eine Aufrecht-Stellung einnimmt, wobei eine Sicherungsvorrichtung (37-39) zur aufhebbaren Sicherung des Basisbauteils (36) in der Aufrecht-Stellung vorgesehen ist, wobei ein Sicherungselement (42, 57) der Sicherungsvorrichtung (37-39) aus einer Sicherungsstellung des Sicherungselements (42, 57) an der Sicherungsvorrichtung (37-39) in eine Freigabestellung des Sicherungselements (42, 57) verstellbar ist, wobei zur Arretierung des Sicherungselements (42, 57) in der Sicherungsstellung ein bewegbares Arretierorgan (43) der Sicherungsvorrichtung (37-39) an einer Rastkontur (44, 63) am Sicherungselement (42, 57) derart in Anlage kommt, dass das Sicherungselement (42, 57) in der Sicherungsstellung arretiert ist, wobei das Arretierorgan (43) federnd bewegbar ist, wobei das Arretierorgan als Federelement gebildet ist.

2. Fluggastsitz nach Anspruch 1, **dadurch gekennzeichnet, dass** ein Verankerungsabschnitt (45) der Sicherungsvorrichtung (37-39) vorgesehen ist, an welchem das Sicherungselement (42, 57) der Sicherungsvorrichtung (37-39) in der Sicherungsstellung verankerbar ist.

3. Fluggastsitz nach einem der vorhergehenden Ansprüche, **dadurch gekennzeichnet, dass** das Arretierorgan (43) quer zur Bewegungsrichtung des Sicherungselements (42) elastisch ausweichbar ausgebildet ist.

4. Fluggastsitz nach einem der vorhergehenden Ansprüche, **dadurch gekennzeichnet, dass** das Arretierorgan (42) als Blattfeder ausgebildet ist.

5. Fluggastsitz nach einem der vorhergehenden Ansprüche, **dadurch gekennzeichnet, dass** das Sicherungselement (42, 57) an einem ersten Lagerabschnitt (59, 62) und an einem zweiten Lagerabschnitt (60, 61) gelagert ist, wobei der erste Lagerabschnitt (59, 62) und der zweite Lagerabschnitt (60, 61) in Längsrichtung des Sicherungselements (42, 57) durch einen Zwischenraum (50) voneinander beabstandet sind.

6. Fluggastsitz nach einem der vorhergehenden Ansprüche, **dadurch gekennzeichnet, dass** das Sicherungselement (42, 57) und die Lagerabschnitte (59-62) derart aufeinander abgestimmt sind, dass das Sicherungselement (42, 57) sowohl in der Sicherungsstellung als auch in der Freigabestellung an dem ersten Lagerabschnitt (59) und an dem zweiten Lagerabschnitt (60, 61) gelagert ist.

7. Fluggastsitz nach einem der vorhergehenden Ansprüche, **dadurch gekennzeichnet, dass** ein Halteelement (47, 55, 56) mit zwei voneinander beabstandeten Schenkeln (48, 49, 55a, 56a) vorgesehen ist, wobei an einem Schenkel (48, 55a) der erste Lagerabschnitt (59, 62) vorhanden ist und an einem anderen Schenkel (49, 56a) des Halteelements (47, 55, 56) der zweite Lagerabschnitt (60, 61) vorhanden ist.

8. Fluggastsitz nach einem der vorhergehenden Ansprüche, **dadurch gekennzeichnet, dass** das Arretierorgan (43) als ein zum Sicherungselement (42, 57) separates Bauteil ausgebildet ist, das auf das Sicherungselement (42, 57) wirkt.

9. Fluggastsitz nach einem der vorhergehenden Ansprüche, **dadurch gekennzeichnet, dass** das Sicherungselement (42, 57) länglich ausgebildet ist mit einem Schaftabschnitt (42b) und einem Kopfabschnitt (42a), wobei der Schaftabschnitt (42b) die Rastkontur (44) umfasst.

10. Fluggastsitz nach einem der vorhergehenden Ansprüche, **dadurch gekennzeichnet, dass** die Rastkontur (44) einen Kerbabschnitt (63) aufweist, wobei der Kerbabschnitt (63) an dem Schaftabschnitt (42b) vorhanden ist, wobei ein Außenmaß des Kerbabschnitts (63) geringer ist als ein Außenmaß des verbleibenden Schaftabschnitts (42b).

11. Fluggastsitz nach einem der vorhergehenden Ansprüche, **dadurch gekennzeichnet, dass** drei Sicherungsvorrichtungen (37-39) zur aufhebbaren Sicherung des Basisbauteils (36) in der Aufrecht-Stellung vorgesehen sind.

12. Sitzreihe (1) umfassend zwei oder mehr als zwei nebeneinander vorhandene Fluggastsitze (3, 4), wobei die Sitzreihe (1) einen Fluggastsitz (3, 4) gemäß einem der vorhergehenden Ansprüche aufweist.

## Claims

1. Aircraft passenger seat (3, 4) comprising a seat base (5, 9), a backrest (6, 10), a foldable leg support (8, 12), a stationary housing (7, 11), and a base component (36), arranged at a front side of the housing (7, 11), of the backrest (6, 10) of the aircraft passenger seat (3, 4), wherein the base component (36), movable relative to the housing (7, 11), adopts an upright position when the backrest (6, 10) is being used, wherein a securing apparatus (37-39) is provided for securing the base component (36) in the upright position in a manner that can be cancelled, wherein a securing element (42, 57) of the securing apparatus (37-39) can be adjusted from a securing position of the securing element (42, 57) with respect to the securing apparatus (37-39) into a release position of the securing element (42, 57), wherein, in order to lock the securing element (42, 57) in the securing position, a movable locking member (43) of the securing apparatus (37-39) moves into abutment against a locking contour (44, 63) on the securing element (42, 57) in such a manner that the securing element (42, 57) is locked in the securing position, wherein the locking member (43) is movable in a resilient manner, wherein the locking member is in the form of a spring element.

2. Aircraft passenger seat according to Claim 1, **characterized in that** an anchoring portion (45) of the securing apparatus (37-39) is provided on which the securing element (42, 57) of the securing apparatus (37-39) can be anchored in the securing position.

3. Aircraft passenger seat according to one of the preceding claims, **characterized in that** the locking member (43) is constructed to be resiliently displaceable transversely relative to the movement direction of the securing element (42).

4. Aircraft passenger seat according to one of the preceding claims, **characterized in that** the locking member (42) is in the form of a leaf spring.

5. Aircraft passenger seat according to one of the preceding claims, **characterized in that** the securing element (42, 57) is supported on a first bearing portion (59, 62) and on a second bearing portion (60, 61), wherein the first bearing portion (59, 62) and the second bearing portion (60, 61) are spaced apart from each other in the longitudinal direction of the securing element (42, 57) by an intermediate space (50).

6. Aircraft passenger seat according to one of the preceding claims, **characterized in that** the securing element (42, 57) and the bearing portions (59-62) are adapted to each other in such a manner that the securing element (42, 57) is supported, both in the securing position and in the release position, on the first bearing portion (59) and on the second bearing portion (60, 61).

7. Aircraft passenger seat according to one of the preceding claims, **characterized in that** a retention element (47, 55, 56) with two mutually spaced-apart legs (48, 49, 55a, 56a) is provided, wherein the first bearing portion (59, 62) is provided on one leg (48, 55a) and the second bearing portion (60, 61) is provided on another leg (49, 56a) of the retention element (47, 55, 56).

8. Aircraft passenger seat according to one of the preceding claims, **characterized in that** the locking member (43) is in the form of a component which is separate from the securing element (42, 57) and which acts on the securing element (42, 57).

9. Aircraft passenger seat according to one of the preceding claims, **characterized in that** the securing element (42, 57) is constructed in an elongate manner with a shaft portion (42b) and a head portion (42a), wherein the shaft portion (42b) comprises the locking contour (44).

10. Aircraft passenger seat according to one of the preceding claims, **characterized in that** the locking contour (44) has a notch portion (63), wherein the notch portion (63) is provided on the shaft portion (42b), wherein an external dimension of the notch portion (63) is smaller than an external dimension of the remaining shaft portion (42b).

11. Aircraft passenger seat according to one of the preceding claims, **characterized in that** three securing apparatuses (37-39) are provided for securing the base component (36) in the upright position in a manner that can be cancelled.

12. Seat row (1) comprising two or more than two aircraft passenger seats (3, 4) which are provided beside each other, wherein the seat row (1) has an aircraft passenger seat (3, 4) according to one of the preceding claims.

## Revendications

1. Siège de passager d'aéronef (3, 4) comprenant un fond de siège (5, 9), un dossier (6, 10), un reposejambes rabattable (8, 12), une enceinte stationnaire (7, 11) et un composant de base (36) du dossier (6, 10) du siège de passager d'aéronef (3, 4) agencé sur un côté avant de l'enceinte (7, 11), le composant de base (36) mobile par rapport à l'enceinte (7, 11) occupant une position verticale lors de l'utilisation du dossier (6, 10), un dispositif de sécurisation (37-39) étant prévu pour sécuriser de manière relevable le composant de base (36) dans la position verticale, un élément de sécurisation (42, 57) du dispositif de sécurisation (37-39) pouvant être déplacé d'une position de sécurisation de l'élément de sécurisation (42, 57) sur le dispositif de sécurisation (37-39) dans une position de dégagement de l'élément de sécurisation (42, 57), un organe de blocage (43) mobile du dispositif de sécurisation (37-39) venant en application contre un contour d'encliquetage (44, 63) sur l'élément de sécurisation (42, 57) pour bloquer l'élément de sécurisation (42, 57) dans la position de sécurisation, de telle sorte que l'élément de sécurisation (42, 57) est bloqué dans la position de sécurisation,
l'organe de blocage (43) étant mobile de manière élastique, l'organe de blocage étant réalisé sous forme d'élément à ressort.

2. Siège de passager d'aéronef selon la revendication 1, **caractérisé en ce qu'**il est prévu une section d'ancrage (45) du dispositif de sécurisation (37-39), sur laquelle l'élément de sécurisation (42, 57) du dispositif de sécurisation (37-39) peut être ancré dans la position de sécurisation.

3. Siège de passager d'aéronef selon l'une quelconque des revendications précédentes, **caractérisé en ce que** l'organe de blocage (43) est réalisé de manière à pouvoir s'écarter élastiquement transversalement à la direction de déplacement de l'élément de sécurisation (42).

4. Siège de passager d'aéronef selon l'une quelconque des revendications précédentes, **caractérisé en ce que** l'organe de blocage (42) est réalisé sous forme de ressort à lame.

5. Siège de passager d'aéronef selon l'une quelconque des revendications précédentes, **caractérisé en ce que** l'élément de sécurisation (42, 57) est monté sur une première section de palier (59, 62) et sur une deuxième section de palier (60, 61), la première section de palier (59, 62) et la deuxième section de palier (60, 61) étant espacées l'une de l'autre dans la direction longitudinale de l'élément de sécurisation (42, 57) par un espace intermédiaire (50).

6. Siège de passager d'aéronef selon l'une quelconque des revendications précédentes, **caractérisé en ce que** l'élément de sécurisation (42, 57) et les sections de palier (59-62) sont adaptés l'un à l'autre de telle sorte que l'élément de sécurisation (42, 57) est monté sur la première section de palier (59) et sur la deuxième section de palier (60, 61) à la fois dans la position de sécurisation et dans la position de dégagement.

7. Siège de passager d'aéronef selon l'une quelconque des revendications précédentes, **caractérisé en ce qu'**il est prévu un élément de retenue (47, 55, 56) avec deux branches (48, 49, 55a, 56a) espacées l'une de l'autre, la première section de palier (59, 62) étant présente sur une branche (48, 55a) et la deuxième section de palier (60, 61) étant présente sur une autre branche (49, 56a) de l'élément de retenue (47, 55, 56).

8. Siège de passager d'aéronef selon l'une quelconque des revendications précédentes, **caractérisé en ce que** l'organe de blocage (43) est réalisé sous la forme d'un composant séparé de l'élément de sécurisation (42, 57), qui agit sur l'élément de sécurisation (42, 57).

9. Siège de passager d'aéronef selon l'une quelconque des revendications précédentes, **caractérisé en ce que** l'élément de sécurisation (42, 57) est réalisé sous forme allongée avec une section de tige (42b) et une section de tête (42a), la section de tige (42b) comprenant le contour d'encliquetage (44).

10. Siège de passager d'aéronef selon l'une quelconque des revendications précédentes, **caractérisé en ce que** le contour d'encliquetage (44) présente une section d'encoche (63), la section d'encoche (63) étant présente sur la section de tige (42b), une dimension extérieure de la section d'encoche (63) étant inférieure à une dimension extérieure du reste de la section de tige (42b) .

11. Siège de passager d'aéronef selon l'une quelconque des revendications précédentes, **caractérisé en ce que** trois dispositifs de sécurisation (37-39) sont prévus pour sécuriser de manière relevable le composant de base (36) dans la position verticale.

12. Rangée de sièges (1) comprenant deux ou plus de deux sièges de passager d'aéronef (3, 4) adjacents, la rangée de sièges (1) présentant un siège de passager d'aéronef (3, 4) selon l'une quelconque des revendications précédentes.
